# EUROPEAN PATENT APPLICATION

(11) **EP 4 625 681 A1**
(43) Date of publication of application: **01.10.2025**
(21) Application number: 24852373.0
(22) Date of filing: 08.08.2024
(51) Int. Cl.: H01M 50/567, H01M 50/531

(54) **BATTERY, AND BATTERY PACK AND VEHICLE COMPRISING SAME**

(30) Priority: 09.08.2023 KR 20230104399
(71) Applicant: LG Energy Solution, Ltd., Seoul 07335 (KR)
(72) Inventor: OH, Jeong-Seop, Daejeon 34122 (KR); LIM, Gu-Min, Daejeon 34122 (KR); KIM, Do-Gyun, Daejeon 34122 (KR); AHN, Seong-Hyeon, Daejeon 34122 (KR); LEE, Seon-Min, Daejeon 34122 (KR); JO, Min-Ki, Daejeon 34122 (KR)
(74) Representative: Goddar, Heinz J.
(86) International application number: PCT/KR2024/011799
(87) International publication number: WO 2025/034020

(57) **Abstract**

Disclosed is a battery, which includes an electrode assembly including a first electrode having a first uncoated portion, a second electrode having a second uncoated portion and configured to have a polarity opposite to the first electrode, and a separator interposed between the first electrode and the second electrode; a battery housing configured to accommodate the electrode assembly through an open portion formed at one side and electrically connected to the second electrode; and a current collection terminal configured to be electrically connected to the first electrode and electrically insulated from the battery housing, the current collection terminal including an electric connection portion configured to be coupled onto one surface of the electrode assembly at a closed portion of the battery housing provided at a side opposite to the open portion and a terminal portion configured to extend from the electric connection portion so that at least a part thereof is exposed to an outside of the battery housing through the closed portion.

## Description

### TECHNICAL FIELD

The present disclosure relates to a battery, and a battery pack and a vehicle including the same.

This application is based on and claims priority from Korean Patent Application No. 10-2023-0104399, filed on August 9, 2023, with the Korean Intellectual Property Office, the disclosure of which is incorporated herein in its entirety by reference.

### BACKGROUND ART

Secondary batteries that have ease of application according to product groups and have electrical characteristics such as high energy density are universally applied not only to portable devices, but also to electric vehicles (EVs) or hybrid electric vehicles (HEVs) driven by an electric drive source.

These secondary batteries are attracting attention as a new energy source for improving eco-friendliness and energy efficiency because they not only have the primary advantage of dramatically reducing the use of fossil fuels, but also do not generate any byproducts from the use of energy.

Types of secondary batteries currently widely used include lithium-ion batteries, lithium polymer batteries, nickel cadmium batteries, nickel hydrogen batteries, nickel zinc batteries, and the like. Such a unit secondary battery cell has an operating voltage of about 2.5 V to 4.5 V. Therefore, when a higher output voltage is required, a battery pack may be configured by connecting a plurality of batteries in series. In addition, a plurality of batteries may be connected in parallel to form a battery pack according to the charge/discharge capacity required for the battery pack. Accordingly, the number and electric connection of batteries included in the battery pack may be variously set according to a required output voltage and/or charge/discharge capacity.

Meanwhile, the battery may be configured to use the battery housing and the terminal as electrode terminals, respectively. The battery may have a structure in which a current collection plate is applied for electrical connection between components. In addition, the battery may have a structure in which an insulator and a gasket are applied between components for electrical insulation between the battery housing and the terminal and electrical insulation between the electrode assembly and the housing.

However, if the number of components for electrical connection and/or components for insulation increases, manufacturing costs may also increase. In addition, the battery production process may become complicated due to additional processes for applying these components, and this complexity in the process may also be a factor in reducing productivity.

### DISCLOSURE

### Technical Problem

The present disclosure is designed to solve the problems of the related art, and therefore the present disclosure is directed to providing a battery with a simplified structure.

However, the technical object to be solved by the present disclosure is not limited to the above, and other objects not mentioned herein will be clearly understood by those skilled in the art from the following disclosure.

### Technical Solution

In one aspect of the present disclosure, there is provided a battery, comprising: an electrode assembly including a first electrode having a first uncoated portion, a second electrode having a second uncoated portion and configured to have a polarity opposite to the first electrode, and a separator interposed between the first electrode and the second electrode; a battery housing configured to accommodate the electrode assembly through an open portion formed at one side and electrically connected to the second electrode; and a current collection terminal configured to be electrically connected to the first electrode and electrically insulated from the battery housing, the current collection terminal including an electric connection portion configured to be coupled onto one surface of the electrode assembly at a closed portion of the battery housing provided at a side opposite to the open portion and a terminal portion configured to extend from the electric connection portion so that at least a part thereof is exposed to an outside of the battery housing through the closed portion.

The electric connection portion and the terminal portion may be provided integrally.

The electric connection portion may be interposed between the electrode assembly and the closed portion and be coupled to the first uncoated portion of the electrode assembly.

The terminal portion may be configured to be riveted onto an outer surface of the closed portion.

The battery may comprise a gasket interposed between the current collection terminal and the battery housing.

The gasket may include a first gasket portion interposed between the electric connection portion and the closed portion inside the battery housing; and a second gasket portion interposed between the terminal portion and the closed portion outside the battery housing

The first gasket portion and the second gasket portion may be provided integrally.

The second gasket portion may be configured to be riveted onto an outer surface of the closed portion together with the terminal portion.

The gasket portion may include a third gasket portion extending from an outer periphery of the first gasket portion and interposed between an outer circumference of the electrode assembly and a sidewall of the battery housing.

The third gasket portion and the first gasket portion may be provided integrally.

The battery may comprise a battery cover configured to cover the open portion of the battery housing.

In another aspect of the present disclosure, there is also provided a battery pack, comprising: the battery according to an embodiment of the present disclosure.

In another aspect of the present disclosure, there is also provided a vehicle, comprising the battery pack according to an embodiment of the present disclosure.

In another aspect of the present disclosure, there is also provided a coupling step of coupling a current collection terminal including an electric connection portion and a terminal portion onto one surface of an electrode assembly; an inserting step of inserting a combination including the current collection terminal and the electrode assembly into the battery housing through an open portion formed at one side of the battery housing so that at least a part of the terminal portion is exposed to an outside of the battery housing through a closed portion provided at a side opposite to the open portion; and a riveting step of riveting the terminal portion exposed to the outside of the battery housing onto the closed portion.

The coupling step may include a step of coupling a gasket including a first gasket portion configured to cover the electric connection portion and a second gasket portion configured to cover the terminal portion to the current collection terminal.

The riveting step may be a step of riveting the terminal portion and the second gasket portion together onto the closed portion.

### Advantageous Effects

According to one aspect of the present disclosure, the production process may be simplified and the production cost may be reduced due to the battery having a simplified structure.

However, the effects that can be derived through the present disclosure are not limited to the effects described above, and other effects not mentioned above will be clearly understood by those skilled in the art from the following disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing the appearance of a battery according to an embodiment of the present disclosure.
FIG. 2 is a drawing showing the internal structure of an upper portion of the battery according to an embodiment of the present disclosure.
FIG. 3 is a drawing showing an electrode assembly according to an embodiment of the present disclosure.
FIG. 4 is a drawing for illustrating a process of inserting a combination of the electrode assembly and the current collection terminal of the present disclosure into a battery housing.
FIG. 5 is a drawing for illustrating a process of riveting the current collection terminal of the present disclosure.
FIGS. 6 and 7 are drawings showing exemplary structures of a third gasket portion of the present disclosure.
FIG. 8 is a drawing showing the internal structure of a lower portion of the battery according to an embodiment of the present disclosure.
FIG. 9 is a diagram showing a battery pack according to an embodiment of the present disclosure.
FIG. 10 is a drawing showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

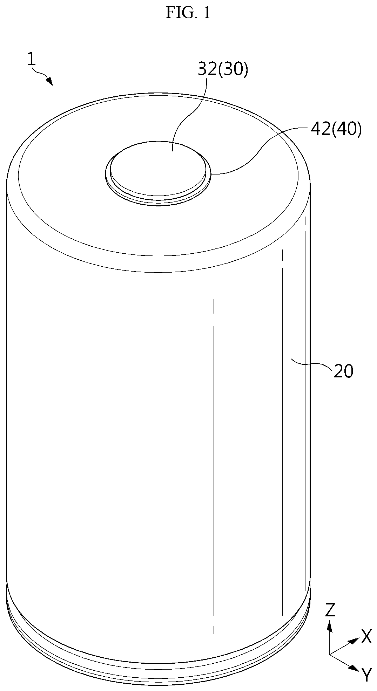

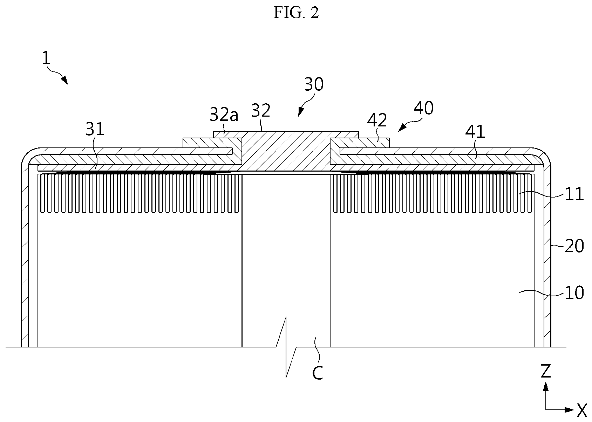

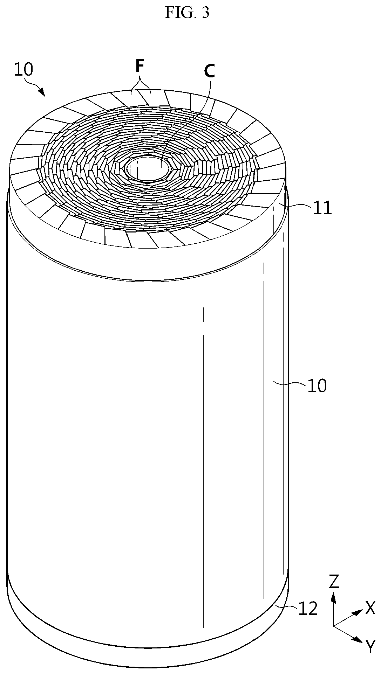

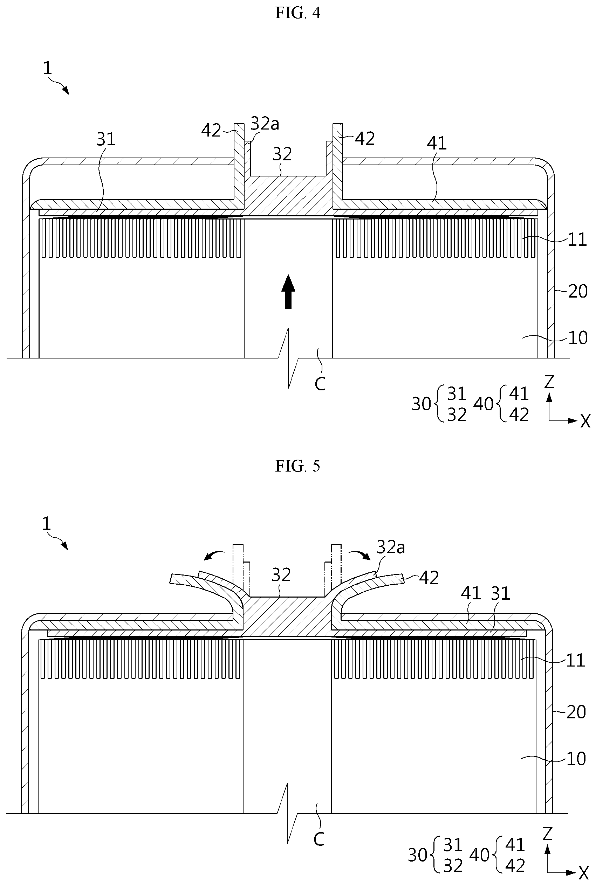

A battery 1 according to an embodiment of the present disclosure will be described with reference to FIGS. 1 to 5. FIG. 1 is a perspective view showing the appearance of a battery according to an embodiment of the present disclosure, and FIG. 2 is a drawing showing the internal structure of an upper portion of the battery according to an embodiment of the present disclosure. FIG. 3 is a drawing showing an electrode assembly according to an embodiment of the present disclosure. FIG. 4 is a drawing for illustrating a process of inserting a combination of the electrode assembly and the current collection terminal of the present disclosure into a battery housing, and FIG. 5 is a drawing for illustrating a process of riveting the current collection terminal of the present disclosure.

First, referring to FIGS. 1 to 3, the battery 1 may include an electrode assembly 10, a battery housing 20, and a current collection terminal 30. The battery 1 may be a secondary battery. The battery 1 may be a cylindrical battery.

The electrode assembly 10 may include a first electrode, a second electrode having a polarity opposite to that of the first electrode, and a separator interposed between the first electrode and the second electrode. The first electrode may be a positive electrode and the second electrode may be a negative electrode. Conversely, the first electrode may be a negative electrode and the second electrode may be a positive electrode. The separator may be configured to cover an inner wall surface of the winding center hole C of the electrode assembly 10. The separator may be configured to at least partially cover an outer circumference of the electrode assembly 10.

The electrode assembly 10 may be a jelly-roll type electrode assembly formed by winding a stack that includes, for example, a positive electrode, a negative electrode, and a separator.

The first electrode of the electrode assembly 10 may have a first uncoated portion 11 extending along the winding direction from one end in the width direction (direction parallel to the Y-axis). The second electrode of the electrode assembly 10 may have a second uncoated portion 12 extending along the winding direction from the other end in the width direction (direction parallel to the Y-axis). The first uncoated portion 11 and the second uncoated portion 12 may be provided on the first surface and the second surface provided at one side and the other side in the height direction (direction parallel to the Y-axis) of the electrode assembly 10, respectively. The first uncoated portion 11 may extend upwardly from the electrode assembly 10. The second uncoated portion 12 may extend downwardly from the electrode assembly 10.

Referring to FIG. 3, the first uncoated portion 11 and/or the second uncoated portion 12 may be bent approximately along the radial direction. By the bending, the first uncoated portion 11 and/or the second uncoated portion 12 may form a plane approximately perpendicular to the height direction (direction parallel to the Z-axis) of the electrode assembly 10. By the bending of the uncoated portion, uncoated portions positioned at different turns may overlap each other. The first uncoated portion 11 and/or the second uncoated portion 12 may be bent from the outer circumference of the electrode assembly 10 toward the core.

The first uncoated portion 11 and/or the second uncoated portion 12 may have a plurality of notching portions spaced apart from each other along the winding direction, and may have a plurality of segments F formed by notching. If the first uncoated portion 11 and/or the second uncoated portion 12 have a plurality of segments F as above, the process of bending the first uncoated portion 11 and/or the second uncoated portion 12 approximately along the radial direction may be performed smoothly.

The battery housing 20 may be configured to accommodate the electrode assembly 10 through an open portion formed at one side. The battery housing 20 may include a sidewall and a closed portion. The sidewall may have a generally cylindrical shape with a hollow inside. The closed portion may be connected to the sidewall. The closed portion may be provided integrally with the sidewall. The battery housing 20 may be electrically connected to the second electrode of the electrode assembly 10. The battery housing 20 may include a conductive metal. Therefore, the battery housing 20 may function as an electrode terminal having the same polarity as the second electrode by itself. An electrolyte may be accommodated within the battery housing 20 together with the electrode assembly 10.

The current collection terminal 30 may be electrically connected to the first electrode of the electrode assembly 10. The current collection terminal 30 may be configured to be electrically insulated from the battery housing 20. The electrical insulation between the current collection terminal 30 and the battery housing 20 may be achieved by a gasket 40, explained later. However, the present disclosure is not limited thereto, and the gasket 40 may be omitted. In this case, an insulating coating layer may be applied to at least an area of the surface of the current collection terminal 30 that faces the battery housing 20 and has a possibility of contact, or the components may be fixed while maintaining a separated state so as to structurally prevent the current collection terminal 30 and the battery housing 20 from contact each other.

The current collection terminal 30 may include an electric connection portion 31 and a terminal portion 32. The electric connection portion 31 may be configured to be coupled onto one surface of the electrode assembly 10 at the closed portion provided at a side opposite to the open portion formed in the battery housing 20. The electric connection portion 31 may be coupled to the first uncoated portion 11 of the first electrode. The electric connection portion 31 may be interposed between the closed portion of the battery housing 20 and the electrode assembly 10. The electric connection portion 31 may have a shape and size corresponding to one surface of the electrode assembly 10 facing the electric connection portion 31 in order to maximize current collection efficiency. An outer diameter or width of the electric connection portion 31 may be larger than an inner diameter or width of a hole formed in the closed portion for passage of the terminal portion 32.

The electric connection portion 31 and the electrode assembly 10 may be coupled by welding. The welding may be, for example, laser welding. When laser welding is performed to couple the electric connection portion 31 and the electrode assembly 10, the laser weld may be formed within an area where the number of overlapping layers of the first uncoated portion 11 is maximum. When laser welding is performed within an area where the number of overlapping layers of the first uncoated portion 11 is maximum, the risk that the first uncoated portion 11 is penetrated by the irradiated laser may be minimized, thereby reducing the risk of the electrode assembly 10 being damaged.

The terminal portion 32 may be configured to extend from the electric connection portion 31 and to at least partially pass through the closed portion of the battery housing 20 and be exposed to the outside of the battery housing 20. Since the terminal portion 32, which passes through the closed portion and is exposed to the outside of the battery housing 20, is configured to have a polarity opposite to the closed portion of the battery housing 20, the battery 1 of the present disclosure may have a structure in which both a positive electrode terminal and a negative electrode terminal are provided at one side. Due to this structure, when a plurality of batteries 1 of the present disclosure are electrically connected, the electrical connection structure may be simplified.

The terminal portion 32 may be provided integrally with the electric connection portion 31. Here, the fact that the terminal portion 32 is provided integrally with the electric connection portion 31 may mean that, when manufacturing the battery 1 of the present disclosure, the process for coupling the terminal portion 32 and the electric connection portion 31 to each other is not performed inside the battery housing 20.

The terminal portion 32 may be configured to be riveted onto the outer surface of the closed portion of the battery housing 20. That is, the terminal portion 32 may be exposed from the inside of the battery housing 20 to the outside through the hole formed in the closed portion, and then may be fixed to the battery housing 20 by a riveting method by bending an edge periphery thereof toward the outer surface of the closed portion of the battery housing 20 by riveting. In order to perform the riveting process in this way, the terminal portion 32 may have a flange portion 32a provided at the edge periphery. An outer diameter or width of the terminal portion 32 in a region where the flange portion 32a is formed may be smaller than an inner diameter or width of the hole formed in the closed portion for passage of the terminal portion 32 before the riveting process is performed, and may be larger than the inner diameter or width of the hole formed in the closed portion after the riveting process is performed.

According to the configuration of the battery 1 of the present disclosure described above, the welding process for coupling the current collection plate coupled to the electrode assembly 10 and the terminal exposed to the outside of the battery housing 20 may be omitted.

Referring to FIGS. 4 and 5, it may be regarded that a process of welding the current collection plate and the terminal to each other is not necessary when manufacturing the battery 1 of the present disclosure. As illustrated in FIG. 4, a combination including the electrode assembly 10 and the current collection terminal 30 coupled onto one surface of the electrode assembly 10 may be inserted through the open portion of the battery housing 20 along the arrow direction. According to this insertion process, the terminal portion 32 of the current collection terminal 30 may be exposed to the outside of the battery housing 20, and the exposed terminal portion 32 may be coupled to the battery housing 20 by riveting.

Therefore, according to the structure of the battery 1 of the present disclosure, a separate current collection plate to be coupled with the electrode assembly 10 is not required, thereby enabling reduction of parts. In addition, according to the structure of the battery 1 of the present disclosure, since the electric connection portion 31 functioning as a current collection plate and the terminal portion 32 functioning as a terminal are provided integrally, there is no need to suffer the difficulty of performing a process for coupling the electric connection portion 31 and the terminal portion 32 in a narrow space inside the battery housing 20. That is, when the current collection plate and the terminal are provided as separate parts, the welding process for coupling the terminal and the current collection plate needs to be performed through the winding center hole C of the electrode assembly 10. However, when a welding tool is inserted or a laser is irradiated through the winding center hole C of the electrode assembly 10, the risk of damage to the electrode assembly 10 may be high due to the narrow space, and the work may also be complicated. Meanwhile, according to the structure of the battery 1 of the present disclosure described above, it is possible to reduce parts, simplify the production process, and minimize the risk of battery defects occurring during the manufacturing process.

Referring to FIGS. 1 to 5, the battery 1 of the present disclosure may include a gasket 40. The gasket 40 may be interposed between the current collection terminal 30 and the battery housing 20. The gasket 40 may be configured to reinforce the sealing force of the battery housing 20 in an area where the current collection terminal 30 is exposed to the outside of the battery housing 20. The gasket 40 may be configured to prevent electrical contact between the current collection terminal 30 and the battery housing 20. Considering these functions, the gasket 40 may include a material having elasticity. The gasket 40 may include a material having electrical insulation.

The gasket 40 may include a first gasket portion 41 and a second gasket portion 42. The first gasket portion 41 may be interposed between the electric connection portion 31 and the closed portion of the battery housing 20 inside the battery housing 20. An outer diameter or width of the first gasket portion 41 may be larger than the outer diameter or width of the electric connection portion 31. The second gasket portion 42 may be interposed between the terminal portion 32 of the current collection terminal 30 and the closed portion of the battery housing 20 outside the battery housing 20. An outer diameter or width of the second gasket portion 42 may be larger than the outer diameter or width of the terminal portion 32. The first gasket portion 41 and the second gasket portion 42 may be provided integrally. The second gasket portion 42 may be riveted onto the outer surface of the closed portion together with the terminal portion 32 of the current collection terminal 30.

According to the structure of the gasket 40 of the present disclosure as described above, the process of installing the insulator for preventing contact between the battery housing 20 and the electric connection portion 31 and the gasket for preventing contact between the terminal portion 32 and the battery housing 20 does not need to be performed separately, thereby eliminating the complexity of the process and reducing the number of parts.

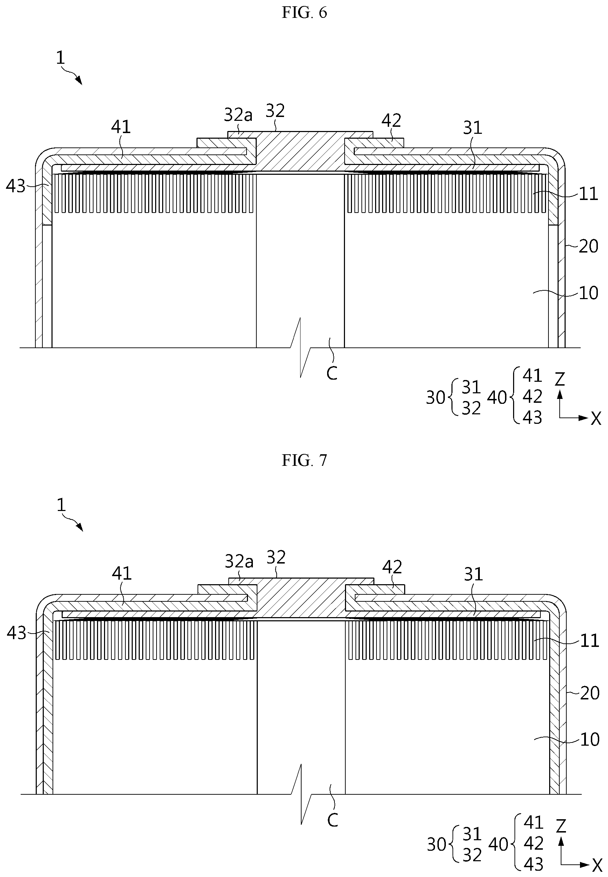

Next, the third gasket portion 43 of the present disclosure will be described with reference to FIGS. 6 and 7. FIGS. 6 and 7 are drawings showing exemplary structures of the third gasket portion of the present disclosure.

Referring to FIGS. 6 and 7, the gasket 40 of the present disclosure may include a third gasket portion 43. The third gasket portion 43 may extend downward (in a direction toward the open portion of the battery housing 20) from an outer periphery of the first gasket portion 41. The third gasket portion 43 may be interposed between the outer circumference of the electrode assembly 10 and the sidewall of the battery housing 20. The third gasket portion 43 and the first gasket portion 41 may be provided integrally.

The third gasket portion 43 may be configured to cover an area (uncoated portion area) in which the first uncoated portion 11 provided on the first electrode of the electrode assembly 10 is formed. The third gasket portion 43 may extend to a point lower than the point where the uncoated portion begins in the outer circumference of the electrode assembly 10.

When the gasket 40 of the present disclosure has the third gasket portion 43 as above, insulation may be reinforced. In addition, when the electrode assembly 10 is inserted into the battery housing 20, interference between the electrode assembly 10 and the sidewall of the battery housing 20 may be prevented due to the third gasket portion 43. Such prevention of interference may minimize the risk of damage to the electrode assembly 10.

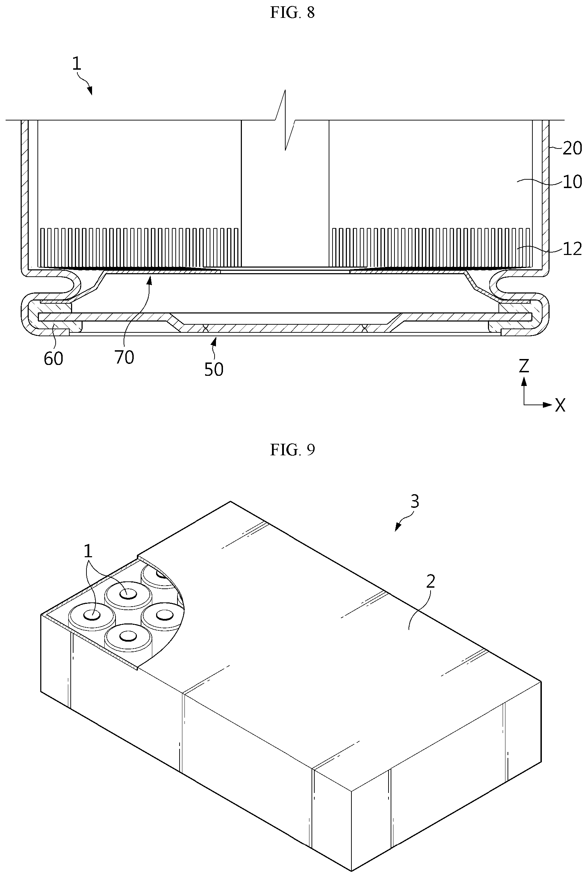

Next, an exemplary structure of the lower portion of the battery 1 of the present disclosure will be described with reference to FIG. 8. FIG. 8 is a drawing showing the internal structure of the lower portion of the battery according to an embodiment of the present disclosure.

Referring to FIG. 8, the battery 1 may include a battery cover 50. The battery cover 50 may be configured to cover the open portion of the battery housing 20. The battery cover 50 may not be electrically connected to the electrode assembly 10 and the battery housing 20. Electrical insulation between the battery cover 50 and the battery housing 20 may be achieved, for example, by an insulation member 60 interposed between the battery cover 50 and the inner surface of the battery housing 20.

However, the present disclosure does not exclude the case where the battery cover 50 has polarity. The battery cover 50 may have a venting portion that is configured to be more vulnerable than the surroundings and is more likely to be ruptured when internal pressure increases.

The battery 1 may include a current collection plate 70. The current collection plate 70 may be electrically connected to the second electrode of the electrode assembly 10. The current collection plate 70 may be coupled to the second uncoated portion 12 of the second electrode. The current collection plate 70 may be coupled onto the inner surface of the sidewall of the battery housing 20. The current collection plate 70 may be interposed between the sidewall of the battery housing 20 and the insulation member 60.

Next, a battery manufacturing method according to an embodiment of the present disclosure will be described with reference to FIGS. 1 to 8.

The battery manufacturing method according to an embodiment of the present disclosure may include a coupling step, an inserting step, and a riveting step.

The coupling step may be a step of coupling the current collection terminal 30 including the electric connection portion 31 and the terminal portion 32 onto one surface of the electrode assembly 10.

The inserting step may be a step of inserting a combination including the current collection terminal 30 and the electrode assembly 10 into the battery housing 20 through the open portion formed at one side of the battery housing 20 such that at least a part of the terminal portion 32 is exposed to the outside of the battery housing 20 through the closed portion provided at a side opposite to the open portion.

The riveting step may be a step of riveting the terminal portion 32 exposed to the outside of the battery housing 20 onto the closed portion of the battery housing 20.

Meanwhile, the coupling step may include a step of coupling the gasket 40 including the first gasket portion 41 configured to cover the electric connection portion 31 and the second gasket portion 42 configured to cover the terminal portion 32 to the current collection terminal 30.

The riveting step may be a step of riveting and fixing the terminal portion 32 and the second gasket portion 42 together onto the closed portion of the battery housing 20.

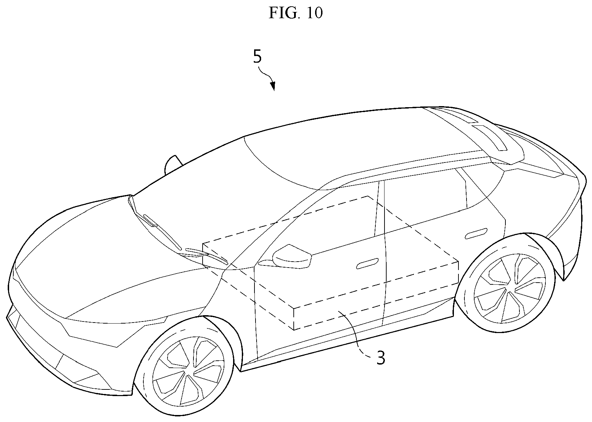

Next, a battery pack 3 and a vehicle 5 according to an embodiment of the present disclosure will be described with reference to FIGS. 9 and 10, respectively.

FIG. 9 is a diagram showing a battery pack according to an embodiment of the present disclosure, and FIG. 10 is a drawing showing a vehicle according to an embodiment of the present disclosure.

Referring to FIG. 9, the battery pack 3 according to an embodiment of the present disclosure may include at least one battery 1 of the present disclosure as described above. The battery 1 may be accommodated in a pack housing 2. The battery pack 3 may include components for electrical connection of the batteries 1 and/or a BMS (Battery Management System) configured to control charging and discharging of the batteries 1.

Next, referring to FIG. 10, the vehicle 5 according to an embodiment of the present disclosure includes at least one battery pack 3. The vehicle 5 may be configured to operate by receiving power by the battery pack 3. The vehicle 5 may be, for example, a hybrid electric vehicle (HEV) or an electric vehicle (EV).

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### [Reference Signs]

1: battery
2: pack housing
3: battery pack
5: vehicle
10: electrode assembly
11: first uncoated portion
12: second uncoated portion
F: segment
C: winding center hole
20: battery housing
30: current collection terminal
31: electric connection portion
32: terminal portion
32a: flange portion
40: gasket
41: first gasket portion
42: second gasket portion
50: battery cover
60: insulation member
70: current collection plate

## Claims

1. A battery, comprising:
an electrode assembly including a first electrode having a first uncoated portion, a second electrode having a second uncoated portion and configured to have a polarity opposite to the first electrode, and a separator interposed between the first electrode and the second electrode;
a battery housing configured to accommodate the electrode assembly through an open portion formed at one side and electrically connected to the second electrode; and
a current collection terminal configured to be electrically connected to the first electrode and electrically insulated from the battery housing, the current collection terminal including an electric connection portion configured to be coupled onto one surface of the electrode assembly at a closed portion of the battery housing provided at a side opposite to the open portion and a terminal portion configured to extend from the electric connection portion so that at least a part thereof is exposed to an outside of the battery housing through the closed portion.

2. The battery according to claim 1,
wherein the electric connection portion and the terminal portion are provided integrally.

3. The battery according to claim 1,
wherein the electric connection portion is interposed between the electrode assembly and the closed portion and is coupled to the first uncoated portion of the electrode assembly.

4. The battery according to claim 1,
wherein the terminal portion is configured to be riveted onto an outer surface of the closed portion.

5. The battery according to claim 1,
wherein the battery comprises a gasket interposed between the current collection terminal and the battery housing.

6. The battery according to claim 5,
wherein the gasket includes:
a first gasket portion interposed between the electric connection portion and the closed portion inside the battery housing; and
a second gasket portion interposed between the terminal portion and the closed portion outside the battery housing.

7. The battery according to claim 6,
wherein the first gasket portion and the second gasket portion are provided integrally.

8. The battery according to claim 6,
wherein the second gasket portion is configured to be riveted onto an outer surface of the closed portion together with the terminal portion.

9. The battery according to claim 6,
wherein the gasket portion includes a third gasket portion extending from an outer periphery of the first gasket portion and interposed between an outer circumference of the electrode assembly and a sidewall of the battery housing.

10. The battery according to claim 9,
wherein the third gasket portion and the first gasket portion are provided integrally.

11. The battery according to claim 1,
wherein the battery comprises a battery cover configured to cover the open portion of the battery housing.

12. A battery pack, comprising the battery according to any one of claims 1 to 11.

13. A vehicle, comprising the battery pack according to claim 12.

14. A battery manufacturing method, comprising:
a coupling step of coupling a current collection terminal including an electric connection portion and a terminal portion onto one surface of an electrode assembly;
an inserting step of inserting a combination including the current collection terminal and the electrode assembly into the battery housing through an open portion formed at one side of the battery housing so that at least a part of the terminal portion is exposed to an outside of the battery housing through a closed portion provided at a side opposite to the open portion; and
a riveting step of riveting the terminal portion exposed to the outside of the battery housing onto the closed portion.

15. The battery manufacturing method according to claim 14,
wherein the coupling step includes a step of coupling a gasket including a first gasket portion configured to cover the electric connection portion and a second gasket portion configured to cover the terminal portion to the current collection terminal, and
wherein the riveting step is a step of riveting the terminal portion and the second gasket portion together onto the closed portion.
